# FASCICULE DE BREVET EUROPEEN

(11) **EP 2 748 022 B1**
(45) Date de publication et mention de la délivrance du brevet: **14.10.2015**
(21) Numéro de dépôt: 12755955.7
(22) Date de dépôt: 09.08.2012
(51) Int. Cl.: F25B 49/02, B60H 1/00, G05D 23/02, F25D 17/02

(54) **DISPOSITIF DE CONTROLE D'UNE CIRCULATION DE FLUIDE REFRIGERANT ET CIRCUIT INCORPORANT UN TEL DISPOSITIF**
VORRICHTUNG ZUR STEUERUNG DES FLUSSES EINES KÜHLMITTELS UND SCHALTKREIS MIT DIESER VORRICHTUNG
DEVICE FOR CONTROLLING THE FLOW OF A COOLANT, AND CIRCUIT INCLUDING SUCH A DEVICE

(30) Priorité: 25.08.2011 FR 1102593
(43) Date de publication de la demande: 02.07.2014
(73) Titulaire: Valeo Systèmes Thermiques, 78321 Le Mesnil-Saint-Denis Cedex (FR)
(72) Inventeur: YAHIA, Mohamed, F-75005 Paris (FR)
(74) Mandataire: Pellegrini, Marie Claude
(86) Numéro de dépôt international: PCT/EP2012/003408
(87) Numéro de publication internationale: WO 2013/026536

(56) Documents cités:
- EP-A1- 1 334 853
- FR-A1- 2 276 957
- FR-A7- 2 376 598
- US-A- 3 841 551

## Description

La présente invention est du domaine des dispositifs ou organes destinés à contrôler une circulation de fluide réfrigérant au sein d'un circuit. Un tel circuit forme une boucle de climatisation qui interagit avec une installation de ventilation, de chauffage et/ou de climatisation d'un véhicule automobile. Elle a pour objet un tel dispositif de contrôle, un circuit incluant ce dispositif et un véhicule qui reçoit ce circuit et ce dispositif de contrôle.

La raréfaction des ressources pétrolières conduit les constructeurs automobiles à développer des véhicules qui fonctionnent à partir de nouvelles sources d'énergie. La propulsion du véhicule par l'énergie électrique est une solution qui représente une alternative intéressante et il est alors nécessaire d'embarquer différents composants liés à la chaîne de traction électrique tels que des batteries pour stocker cette énergie électrique, un moteur électrique qui assure la propulsion du véhicule et un onduleur qui adapte le signal électrique au moteur.

Le conditionnement thermique de l'habitacle de ces véhicules électriques reste une fonction qui doit être prise en charge. Ainsi, et bien que le moteur à combustion interne est absent du véhicule, il convient de trouver une solution technique susceptible de chauffer et refroidir l'habitacle du véhicule électrique.

Une solution connue de l'art antérieur consiste à équiper le véhicule électrique d'un circuit de fluide réfrigérant combiné à une boucle de fluide caloporteur. Dans le cas de véhicule électrique d'entrée de gamme, cette solution doit être la plus simple possible en vue d'en réduire son coût. Le circuit de fluide réfrigérant se limite ainsi à un compresseur, un échangeur de chaleur entre le fluide caloporteur et le fluide réfrigérant, un organe de détente, un évaporateur et un moyen de stockage du fluide réfrigérant.

Selon la demande dans l'habitacle, ce circuit est utilisé en un mode de refroidissement ou en un mode de chauffage. Dans ces deux modes, le fluide réfrigérant circule dans un même sens et au travers des mêmes composants. En mode de chauffage, le circuit puise les calories dans le flux d'air en provenance de l'habitacle lorsque celui-ci traverse l'évaporateur et les restitue à la boucle de fluide caloporteur pour que celle-ci chauffe un radiateur traversé par un flux d'air envoyé dans l'habitacle.

En mode de refroidissement, le circuit puise également les calories dans le flux d'air envoyé dans l'habitacle lors de son passage au travers de l'évaporateur. Ces calories sont transmises au fluide caloporteur par le biais de l'échangeur de chaleur entre le fluide caloporteur et le fluide réfrigérant, le fluide caloporteur étant chargé de transporter ces calories vers un radiateur installé en face avant du véhicule. Ce radiateur dissipe alors ces calories dans le flux d'air extérieur qui traverse la face avant du véhicule.

Une telle architecture est satisfaisante car son fonctionnement est simplifié. On comprend par exemple que le fluide réfrigérant ne subit pas d'inversion de sens de circulation et n'est pas détourné de certains composants en fonction du mode de fonctionnement opéré. Il s'ensuit que ce circuit ne comporte pas de vanne, inverseur ou autre élément susceptible de complexifier l'architecture de ce circuit.

Bien que cette architecture atteigne son objectif de simplification, elle présente l'inconvénient d'être limitée en termes de performances thermiques quand le mode de refroidissement est opéré. Ceci est la conséquence de l'échange thermique réalisé entre le fluide réfrigérant et le fluide caloporteur dans l'échangeur dédié à cet effet.

Le but de la présente invention est donc de résoudre l'inconvénient décrit ci-dessus principalement en augmentant les performances thermiques de ce circuit quand celui-ci est utilisé en mode de refroidissement sans complexifier le circuit de fluide réfrigérant.

Par ailleurs, le document FR 2 276 957 A1, qui est considéré comme l'art antérieur le plus proche, divulgue un dispositif de contrôle d'une circulation de fluide réfrigérant dans un circuit, comportant un moyen de contrôle de la circulation de fluide réfrigérant dont au moins une ouverture est placée sous la dépendance d'un moyen de détection thermostatique.

L'invention a donc pour objet un dispositif de contrôle d'une circulation de fluide réfrigérant dans un circuit et apte à être exposé à un flux d'air extérieur en face avant d'un véhicule, comprenant un moyen de contrôle de la circulation de fluide réfrigérant dont au moins une ouverture est placée sous la dépendance d'un moyen de détection thermostatique, dans lequel le moyen de détection thermostatique comprend une surface thermoconductrice exposée audit flux d'air extérieur. Un tel dispositif permet d'autoriser ou d'interdire la circulation de fluide réfrigérant en direction d'un composant supplémentaire du circuit qui améliore le coefficient de performance du cycle thermodynamique qui prend place dans le circuit quand le mode de refroidissement de l'habitacle est actionné.

Selon une première caractéristique de l'invention, le moyen de détection thermostatique est une chambre contenant un fluide de contrôle et délimitée d'un côté par la surface thermoconductrice et de l'autre par une membrane déformable. Le fluide de contrôle est par exemple, et de manière préférentielle, le fluide réfrigérant utilisé dans le circuit. On comprend de ceci que la surface dite « sensible » voit la température du flux d'air extérieur et n'est pas influencée par la température du fluide réfrigérant qui traverse le dispositif de contrôle selon l'invention.

Selon une deuxième caractéristique de l'invention, la surface thermoconductrice est réalisée en un matériau dont la conductivité thermique est au moins égale à 30 W.m⁻¹.K⁻¹. Il s'agit par exemple d'un acier ou d'un alliage d'aluminium.

Selon une autre caractéristique de l'invention, le moyen de contrôle de la circulation de fluide réfrigérant comprend un siège qui reçoit un obturateur relié au moyen de détection thermostatique par une tige.

Selon encore une caractéristique de l'invention, le dispositif comprend un corps duquel débouche la surface thermoconductrice. On garantit ainsi que la surface thermoconductrice est aisément exposée au flux d'air extérieur.

Selon encore une autre caractéristique de l'invention, le corps comprend au moins une première entrée raccordée à une première sortie par l'intermédiaire d'un premier conduit, la circulation de fluide réfrigérant dans le conduit étant placée sous la dépendance du moyen de contrôle.

Dans cette structure, le corps comprend une deuxième entrée raccordée à une deuxième sortie par l'intermédiaire d'un deuxième conduit, la première entrée et la deuxième sortie étant raccordée par un moyen de contournement du moyen de contrôle. Une telle structure garantit un retour du fluide réfrigérant vers le reste du circuit quand le moyen de contrôle est fermé consécutivement au fait que la température du flux d'air extérieur passe en dessous d'un seuil déterminé, par exemple 20°C. Le circuit est alors opéré en mode de chauffage.

Selon un exemple de réalisation, le moyen de contournement du moyen de contrôle comprend un canal et un dispositif de perte de charge.

L'invention couvre aussi un circuit de fluide réfrigérant comprenant un compresseur, un premier échangeur entre le fluide réfrigérant et un fluide liquide caloporteur, un moyen de détente apte à abaisser la pression du fluide réfrigérant, et un évaporateur destiné à refroidir un flux d'air qui le traverse par échange thermique avec le fluide réfrigérant, caractérisé en ce qu'il comprend un deuxième échangeur agencé pour réaliser un échange thermique entre un flux d'air extérieur en face avant d'un véhicule et le fluide réfrigérant et un dispositif de contrôle de la circulation du fluide réfrigérant selon l'une quelconque des caractéristiques présentées ci-dessus. Avantageusement, la circulation de fluide réfrigérant dans le deuxième échangeur de chaleur est placée sous la dépendance du dispositif de contrôle.

Il est également prévu que l'invention protège un véhicule comprenant un circuit tel qu'évoqué ci-dessus et une face avant apte à être traversée par un flux d'air extérieur au véhicule, ladite face avant comprenant le deuxième échangeur, ledit dispositif de contrôle étant agencé sur la face avant de sorte à ce que la surface thermoconductrice soit exposée au flux d'air extérieur.

Avantageusement, un tel véhicule comprend un compartiment moteur dans lequel est installé au moins un groupe motopropulseur du véhicule, caractérisé en ce qu'il comprend un moyen d'isolation thermique de la surface thermoconductrice vis-à-vis du compartiment moteur.

Un tout premier avantage selon l'invention réside dans l'augmentation des performances thermiques du circuit quand celui-ci est opéré en mode de refroidissement.

Un autre avantage réside dans la simplicité des composants ajoutés au circuit pour améliorer ces performances.

Un autre avantage non négligeable réside dans le fait que le dispositif agit automatiquement et de manière autonome, sans qu'il soit nécessaire de l'alimenter électriquement.

D'autres caractéristiques, détails et avantages de l'invention ressortiront plus clairement à la lecture de la description donnée ci-après à titre indicatif en relation avec des dessins dans lesquels :
- la figure 1 est une vue schématique du dispositif de contrôle selon l'invention,
- la figure 2 est une vue de dessus d'une partie avant d'un véhicule, illustrant le circuit et son dispositif de contrôle selon l'invention.

Il faut noter que les figures exposent l'invention de manière détaillée pour mettre en oeuvre l'invention, lesdites figures pouvant bien entendu servir à mieux définir l'invention le cas échéant.

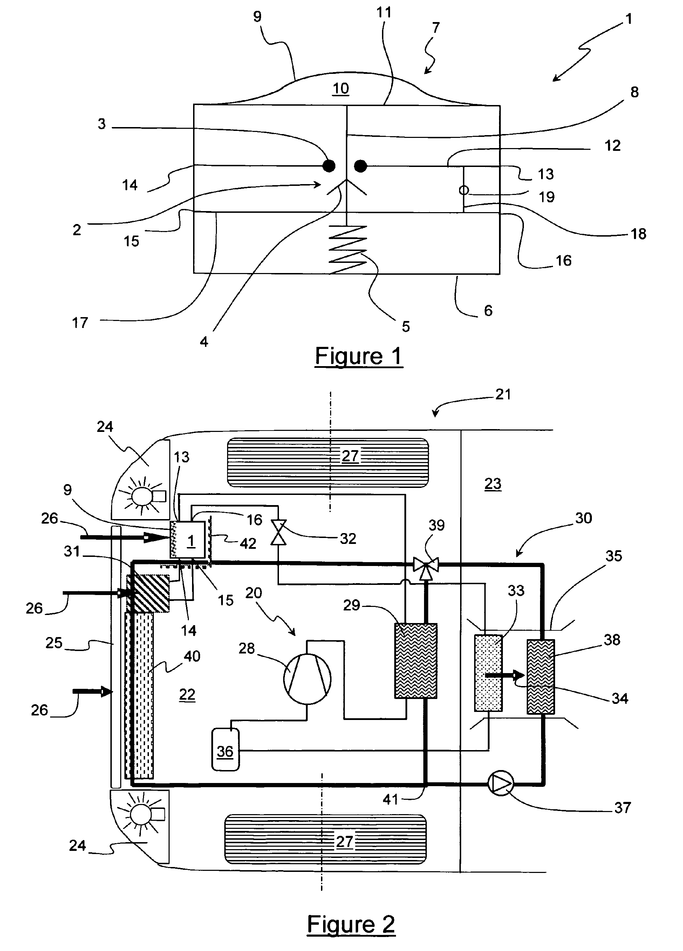

La figure 1 illustre de manière schématique la structure du dispositif de contrôle 1 selon l'invention. Ce dispositif est destiné à être installé au coeur d'un circuit de fluide réfrigérant en vue de gérer une circulation de ce fluide au moins dans une portion de circuit. Ce circuit est monté sur un véhicule automobile en vue de générer ou capter des calories envoyées dans l'habitacle du véhicule par le biais d'un cycle thermodynamique opéré par le fluide réfrigérant, autrement appelé fluide frigorigène.

Du point de vue de son implantation sur le véhicule, le dispositif de contrôle 1 est installé de telle sorte qu'il est exposé à un flux d'air extérieur qui s'apprête à traverser une face avant du véhicule.

Ce dispositif de contrôle 1 comprend un moyen de contrôle 2 dont la fonction est d'autoriser ou d'interdire une circulation de fluide réfrigérant dans le conduit qui reçoit ce moyen de contrôle 2. Ce moyen de contrôle 2 est bistable en ce sens qu'il est susceptible de prendre deux positions extrêmes, une première position correspondant une ouverture complète alors qu'une deuxième position correspond à une fermeture, ou obturation totale.

A titre d'exemple de réalisation, le moyen de contrôle 2 comprend un siège 3 qui reçoit un obturateur 4. Le siège 3 est une zone du moyen de contrôle sur laquelle vient se poser l'obturateur 4 de manière étanche. Un tel obturateur prend notamment la forme d'une bille mais il peut également s'agir d'un coulisseau cylindrique ou conique.

Selon l'exemple de la figure 1, l'obturateur 4 est maintenu plaqué contre le siège 3 par un ressort 5, ce dernier étant d'un côté en appui contre un corps 6 constitutif du dispositif de contrôle 1, et de l'autre en appui directement ou indirectement contre l'obturateur 4.

Le dispositif de contrôle 1 comprend encore un moyen de détection thermostatique 7. Ce dernier est relié par une tige 8 à l'obturateur 4 de manière à agir sur le déplacement de cet obturateur et ainsi ouvrir ou fermer le moyen de contrôle 2.

La fonction du moyen de détection thermostatique 7 est de transformer un écart de température détecté par ce moyen en un mouvement mécanique, par exemple une rotation, ou encore une translation, comme c'est le cas de la solution représentée sur la figure 1, notamment au moyen de la tige 8.

Le moyen de détection thermostatique 7 comprend une surface thermoconductrice 9 exposée au flux d'air extérieur, au moment où celui-ci traverse la face avant du véhicule. Cette surface thermoconductrice 9 forme l'une des parois extérieures du corps 6. A titre d'exemple, la surface thermoconductrice 9 débouche ou dépasse du corps ce qui permet de garantir que celle-ci s'étend sur une aire suffisamment étendue pour détecter la température.

Le moyen de détection thermostatique 7 est formé par exemple par une chambre 10 contenant un fluide de contrôle. Ce fluide est notamment identique au fluide réfrigérant qui circule dans le circuit de manière à ce que ses propriétés thermiques induisent un actionnement du moyen de contrôle 2 compatible avec le fonctionnement du circuit. Il va de soit que ce fluide de contrôle peut également être choisi parmi les fluides suivants connus sous l'acronyme R134a ou HFO1234yf.

La chambre 10 est délimitée par deux composants. Un premier composant est la surface thermoconductrice 9. Cette surface réagit à la température du flux d'air qui vient la frapper et transmet cette température directement au fluide de contrôle présent dans la chambre 10. A titre d'exemple, cette surface thermoconductrice est réalisée en un matériau métallique tel qu'un acier ou un alliage d'aluminium. En tout état de cause et pour permettre une réaction rapide du dispositif de contrôle 1, la surface thermoconductrice est réalisée en un matériau dont la conductivité thermique est au moins égale à 30 W.m⁻¹.K⁻¹.

Le deuxième composant délimitant la chambre 10 est une membrane déformable 11. On comprend ainsi que le fluide de contrôle est enfermé dans un volume clos par la membrane déformable 11 et par la surface thermoconductrice 9. Cette membrane 11 se déforme sous l'action de la dilatation du fluide de contrôle de manière à entrainer un déplacement de la tige 8. Il ressort de ce qui précède que le flux d'air extérieur au véhicule transmet ses calories à la surface thermoconductrice 9, qui à son tour agit thermiquement sur le fluide de contrôle, la dilatation de ce dernier ayant pour conséquence de déplacer la membrane déformable dans le but d'ouvrir ou de fermer le moyen de contrôle 2.

Le corps 6 du dispositif de contrôle est un bloc par exemple métallique dans lequel est pratiqué un premier conduit 12 sur le trajet duquel on trouve le moyen de contrôle 2. Ce premier conduit 12 comprend une première entrée 13 et une première sortie 14 par lesquelles le fluide réfrigérant en provenance du circuit peut entrer, respectivement sortir.

Dans une version améliorée du dispositif de contrôle 1, le corps 6 comprend en outre une deuxième entrée 15 raccordée à une deuxième sortie 16 par l'intermédiaire d'un deuxième conduit 17. On notera que la première entrée 13 et la deuxième sortie 16 sont mises en communication l'une avec l'autre par un moyen de contournement dont la fonction est d'autoriser le passage du fluide réfrigérant quand le moyen de contrôle 2 est fermer, et d'en interdire le passage quand le moyen de contrôle 2 est ouvert.

Ce moyen de contournement comprend notamment un canal 18 sur le trajet duquel on trouve un dispositif de perte de charge 19. Une telle structure garantit que le fluide réfrigérant se dirige de la première entrée 13 vers la première sortie 14 quand le moyen de contrôle 2 est ouvert. Corrélativement, ce canal 18 et ce dispositif de perte de charge 19 autorisent un contournement du dispositif de contrôle 1 selon l'invention pour que le fluide réfrigérant puisse retourner dans le circuit quand les conditions de températures extérieures imposent une fermeture du moyen de contrôle 2. A titre d'exemple, le dispositif de perte de charge est un clapet taré à une pression déterminée. Selon un autre exemple, le dispositif de perte de charge est un orifice de section fixe, son diamètre interne étant notamment égal à 4 mm. Le canal 18 et le dispositif de perte de charge 19 constituent un moyen de contournement d'un deuxième échangeur qui sera détaillé en rapport avec la figure 2. Dans une autre alternative, le moyen de contournement peut être distinct du dispositif de contrôle 1, ce qui permet de simplifier la structure de ce dernier. En tout état de cause, le moyen de contournement présente une perte de charge supérieure à la perte de charge de la portion de circuit comprenant le moyen de contrôle 2 et le deuxième échangeur.

La figure 2 illustre le circuit 20 de fluide réfrigérant selon l'invention. Cette figure montre également une partie avant d'un véhicule 21. Ce véhicule est représenté vue de dessus et présente un compartiment moteur 22, un compartiment habitacle 23 partiellement dessiné et séparé du compartiment moteur par un tablier, et enfin deux roues avant 27 du véhicule. Il s'agit d'un véhicule à propulsion électrique en ce sens que le moteur qui anime son déplacement est un moteur électrique.

La face avant du véhicule comprend deux projecteurs 24 et par exemple une calandre 25 disposée transversalement entre les deux projecteurs. La face avant est la zone du véhicule qui est traversée par le flux d'air extérieur 26 quand le véhicule est mis en mouvement.

Le circuit 20 de fluide réfrigérant comprend un compresseur 28, notamment électrique, dont la fonction est de mettre en circulation le fluide réfrigérant au sein du circuit. Une sortie du compresseur est raccordée à une entrée d'un premier échangeur 29 dont la fonction est de réaliser une échange thermique entre le fluide réfrigérant qui le traverse et un fluide caloporteur, notamment liquide, ce dernier circulant dans une boucle de fluide caloporteur 30. Le premier échangeur 29 est ainsi un échangeur de chaleur fluide/fluide dépourvu de zone d'échange avec un quelconque flux d'air.

Une sortie du premier échangeur 29 est raccordée à la première entrée 13 du dispositif de contrôle 1 selon l'invention. La première sortie 14 de ce dispositif est raccordée à une entrée d'un deuxième échangeur thermique 31. La fonction de ce dernier est de réaliser un échange thermique entre le flux d'air extérieur 26 qui passe à son travers et le fluide réfrigérant qui circule dans ce deuxième échangeur 31. On assure ainsi un refroidissement de ce fluide réfrigérant.

Ce deuxième échangeur de chaleur 31 est agencé sur le véhicule par exemple au niveau de la face avant de ce dernier.

Une sortie de ce deuxième échangeur de chaleur 31 est raccordée à la deuxième entrée 15 du dispositif de contrôle 1. La deuxième sortie 16 du dispositif de contrôle est quant à elle mise en communication avec un moyen de détente 32.

On notera tout particulièrement l'agencement du dispositif de commande 1 par rapport au véhicule. En effet, le dispositif de contrôle 1 est installé au niveau de la face avant de telle sorte que la surface thermoconductrice 9 soit exposée au flux d'air extérieur 26.

Le moyen de détente a pour fonction d'abaisser la pression du fluide réfrigérant lors de la mise en oeuvre du cycle thermodynamique qui prend place dans le circuit. Ce moyen de détente est par exemple un orifice à section fixe, un détendeur à commande thermostatique ou encore un détendeur à commande électronique.

Une sortie du moyen de détente 32 est raccordée à un évaporateur 33 destiné à refroidir un flux d'air intérieur 34 qui le traverse, par échange thermique avec le fluide réfrigérant. Le flux d'air intérieur 34 est celui qui est envoyé dans l'habitacle 23 en vue de chauffer ou refroidir ce dernier. L'évaporateur 33 est monté dans une installation de ventilation, chauffage et/ou climatisation représentée symboliquement par la référence 35.

Une sortie de l'évaporateur 33 peut être raccordée directement à une entrée du compresseur 28. Cependant, la figure 2 montre la présence d'un dispositif de stockage de fluide réfrigérant intercalé entre la sortie de l'évaporateur 33 et l'entrée du compresseur 28. Dans cette configuration, il s'agit d'un accumulateur 36.

Selon une variante de réalisation, le dispositif de stockage est placé sur le circuit entre la sortie du premier échangeur 29 et la première entrée 13 du dispositif de contrôle 1. Dans cette configuration, il s'agit d'une bouteille qui présente l'avantage de fournir le fluide réfrigérant en phase liquide au dispositif de contrôle 1. Ainsi, le deuxième échangeur 31 est traversé par le fluide réfrigérant à l'état liquide et son refroidissement dans cet état contribue à améliorer le coefficient de performance du circuit de fluide frigorigène.

Le véhicule 21 est également équipé de la boucle 30 de fluide caloporteur qui interagit avec le circuit 20 pour le conditionnement thermique de l'habitacle.

Cette boucle 30 de fluide caloporteur comprend une pompe 37 qui assure la mise en circulation du fluide caloporteur dans la boucle 30. Une sortie de cette pompe 37 est raccordée à une entrée d'un aérotherme 38 dont la fonction est de chauffer le flux d'air intérieur 34. Pour ce faire, cet aérotherme 38 est monté dans l'installation de ventilation, chauffage et/ou climatisation 35, en particulier en aval de l'évaporateur 33 selon le sens de déplacement du flux d'air intérieur 34.

Une sortie de cet aérotherme 38 est raccordée à un organe de bifurcation 39, ce dernier prenant par exemple la forme d'une vanne trois voies. L'un des orifices de cet organe de bifurcation 39 est raccordé à un radiateur 40 installé en face avant du véhicule 21, alors qu'un autre orifice de la vanne trois voies est raccordé au premier échangeur de chaleur 29, via un orifice d'entrée de fluide caloporteur.

La fonction du radiateur 40 est de dissiper les calories présentes dans le fluide caloporteur dans le flux d'air extérieur 26 qui passe à son travers. Selon un exemple de réalisation, le radiateur 40 et le deuxième échangeur 31 sont disposés de manière immédiatement adjacente. Avantageusement, une face frontale du radiateur 40 s'étend dans le même plan qu'une face frontale du deuxième échangeur 31. Selon un mode de réalisation, le radiateur 40 et le deuxième échangeur 31 forme un ensemble unitaire.

Une sortie du radiateur 40 est raccordée à un point de raccordement 41, ce dernier étant en communication à la fois avec l'entrée de la pompe 37 et avec un orifice de sortie de fluide caloporteur du premier échangeur 29.

On s'attache maintenant à décrire le fonctionnement du circuit 20 ainsi que son interaction avec la boucle 30 de fluide caloporteur.

L'installation de ventilation, chauffage et/ou climatisation fonctionne selon un mode de chauffage et/ou un mode de refroidissement. En revanche, le circuit fonctionne de manière identique dans ces deux modes, à l'exception du dispositif de contrôle selon l'invention. Autrement dit, le fluide réfrigérant circule dans un même sens dans le circuit lors de la mise en oeuvre de ces deux modes.

En mode de refroidissement, la température du flux d'air extérieur est supérieure ou égale à un seuil déterminé, par exemple 20°C. Le compresseur 28 comprime et élève la température du fluide réfrigérant. Ce dernier subit une première étape de refroidissement par échange thermique avec le fluide caloporteur au sein du premier échangeur 29. Le dispositif de contrôle 1, qui détecte la température du flux d'air extérieur et considère que le seuil déterminé est atteint ou dépassé, autorise la circulation du fluide réfrigérant dans le deuxième échangeur 31 où une deuxième étape de refroidissement du fluide réfrigérant, notamment en phase liquide, améliore les performances thermiques du circuit.

Le moyen de détente 32 abaisse ensuite la pression du fluide réfrigérant et l'évaporateur 33 capte les calories présentes dans le flux d'air intérieur 34.

En mode de chauffage, la température du flux d'air extérieur est inférieure au seuil déterminé. Le fonctionnement du circuit est identique à l'exception de ce qui suit.

Le dispositif de commande 1 bloque l'accès vers le deuxième échangeur 31 car la température du flux d'air extérieur détecté par la surface thermoconductrice est inférieur au seuil déterminé. Le fluide réfrigérant est alors contraint de contourner ce deuxième échangeur, notamment en passant par le moyen de contournement. Dans une variante de réalisation du moyen de contournement, celui-ci comprend le canal et le dispositif de perte de charge, ces éléments pouvant être intégrés au dispositif de commande 1 selon l'invention. Selon une autre variante, ces éléments sont distincts du dispositif de contrôle 1. Il importe dans tous les cas que ces éléments forment un moyen de contournement du moyen de contrôle, et corrélativement du deuxième échangeur 31, dont la sortie est amont du moyen de détente 32 selon le sens de circulation du fluide réfrigérant.

Dans ce mode, les calories sont puisées au niveau de l'évaporateur 33 grâce au fait que le flux d'air intérieur 34 est prélevé en totalité à l'intérieur de l'habitacle. Ces calories sont distribuées au fluide caloporteur par l'intermédiaire de l'échange thermique entre le fluide réfrigérant et le fluide caloporteur qui prend place dans le premier échangeur 29. L'organe de bifurcation 39 est placé dans une position où il impose une circulation du fluide caloporteur dans l'aérotherme 38, bloquant ainsi toute circulation dans le radiateur 40. On génère ainsi l'élévation de température du flux d'air intérieur 34 en vue d'assurer la fonction de chauffage de l'habitacle du véhicule 21.

En ce qui concerne le circuit 20, on notera tout particulièrement que c'est la détection de température du flux d'air extérieur 26 par la surface thermoconductrice 9 qui gère seule le passage du mode de chauffage au mode de refroidissement.

Dans une version améliorée de l'invention, le dispositif de contrôle 1 est isolé thermiquement du compartiment moteur 22. En effet, la température de l'air présent dans ce dernier est différente de la température du flux d'air extérieur 26, ce qui est de nature à influencer le fonctionnement du dispositif de contrôle 1. L'invention prévoit ainsi un moyen d'isolation thermique 42 de la surface thermoconductrice 9 vis-à-vis du compartiment moteur 22. A titre d'exemple de réalisation, ce moyen d'isolation est thermique 42 est formé par un écran thermique intercalé entre le dispositif de contrôle 1 et le compartiment moteur 22.

## Revendications

1. Dispositif de contrôle (1) d'une circulation de fluide réfrigérant dans un circuit (20) et apte à être exposé à un flux d'air extérieur (26) en face avant d'un véhicule (21), comprenant un moyen de contrôle (2) de la circulation de fluide réfrigérant dont au moins une ouverture est placée sous la dépendance d'un moyen de détection thermostatique (7), **caractérisé en ce que** le moyen de détection thermostatique (7) comprend une surface thermoconductrice (9) exposée audit flux d'air extérieur (26).

2. Dispositif selon la revendication 1, dans lequel le moyen de détection thermostatique (7) est une chambre (10) contenant un fluide de contrôle et délimitée d'un côté par la surface thermoconductrice (9) et de l'autre par une membrane déformable (11).

3. Dispositif selon l'une quelconque des revendications 1 à 2, dans lequel la surface thermoconductrice (9) est réalisée en un matériau dont la conductivité thermique est au moins égale à 30 W.m⁻¹.K⁻¹.

4. Dispositif selon l'une quelconque des revendications 1 à 3, dans lequel le moyen de contrôle (2) de la circulation de fluide réfrigérant comprend un siège (3) qui reçoit un obturateur (4) relié au moyen de détection thermostatique (7) par une tige (8).

5. Dispositif selon l'une quelconque des revendications précédentes, comprenant un corps (6) duquel débouche la surface thermoconductrice (9).

6. Dispositif selon la revendication 5, dans lequel le corps (6) comprend au moins une première entrée (13) raccordée à une première sortie (14) par l'intermédiaire d'un premier conduit (12), la circulation de fluide réfrigérant dans le conduit étant placée sous la dépendance du moyen de contrôle (2).

7. Dispositif selon la revendication 6, dans lequel le corps (6) comprend une deuxième entrée (15) raccordée à une deuxième sortie (16) par l'intermédiaire d'un deuxième conduit (17), la première entrée (13) et la deuxième sortie (16) étant raccordée par un moyen de contournement du moyen de contrôle (2)

8. Dispositif selon la revendication 7, dans lequel le moyen de contournement du moyen de contrôle (2) comprend un canal (18) et un dispositif de perte de charge (19).

9. Circuit (20) de fluide réfrigérant comprenant un compresseur (28), un premier échangeur (29) entre le fluide réfrigérant et un fluide liquide caloporteur, un moyen de détente (32) et un évaporateur (33) destiné à refroidir un flux d'air intérieur (34) qui le traverse par échange thermique avec le fluide réfrigérant, **caractérisé en ce qu'**il comprend un deuxième échangeur (31) agencé pour réaliser un échange thermique entre un flux d'air extérieur (26) en face avant d'un véhicule (21) et le fluide réfrigérant et un dispositif de contrôle (1) de la circulation du fluide réfrigérant selon l'une quelconque des revendications précédentes.

10. Véhicule comprenant un circuit selon la revendication 9 et une face avant apte à être traversée par un flux d'air extérieur (26) au véhicule (21), ladite face avant comprenant le deuxième échangeur (31), ledit dispositif de contrôle (1) étant agencé sur la face avant de sorte à ce que la surface thermoconductrice (9) soit exposée au flux d'air extérieur (26).

11. Véhicule selon la revendication 10, comprenant un compartiment moteur (22) dans lequel est installé au moins un groupe motopropulseur du véhicule, **caractérisé en ce qu'**il comprend un moyen d'isolation thermique (42) de la surface thermoconductrice (9) vis-à-vis du compartiment moteur (22).

## Patentansprüche

1. Steuervorrichtung (1) einer Kühlflüssigkeitszirkulation in einem Kreislauf (20), die geeignet ist, einem Außenluftstrom (26) auf der Vorderseite eines Fahrzeugs (21) ausgesetzt zu sein, die ein Steuermittel (2) der Kühlflüssigkeitszirkulation umfasst, von dem mindestens eine Öffnung von einem thermostatischen Erfassungsmittel (7) abhängig ist,
**dadurch gekennzeichnet, dass**
das thermostatische Erfassungsmittel (7) eine Wärme leitende Oberfläche (9) umfasst, die dem Außenluftstrom (26) ausgesetzt ist.

2. Vorrichtung nach Anspruch 1, bei der das thermostatische Erfassungsmittel (7) eine Kammer (10) ist, die ein Steuerfluid enthält und auf einer Seite von der Wärme leitenden Oberfläche (9) und auf der anderen von einer verformbaren Membran (11) abgegrenzt ist.

3. Vorrichtung nach einem der Ansprüche 1 bis 2, bei der die Wärme leitende Oberfläche (9) aus einem Werkstoff hergestellt ist, dessen Wärmeleitfähigkeit mindestens gleich 30 W.m⁻¹.K⁻¹ ist.

4. Vorrichtung nach einem der Ansprüche 1 bis 3, bei der das Steuermittel (2) der Kühlflüssigkeitszirkulation einen Sitz (3) umfasst, der einen Verschluss (4) aufnimmt, der mit dem thermostatischen Erfassungsmittel (7) durch einen Schaft (8) verbunden ist.

5. Vorrichtung nach einem der vorhergehenden Ansprüche, die einen Körper (6) umfasst, aus dem die Wärme leitende Oberfläche (9) mündet.

6. Vorrichtung nach Anspruch 5, bei der der Körper (6) mindestens einen ersten Eingang (13) umfasst, der an einen ersten Ausgang (14) über eine erste Leitung (12) angeschlossen ist, wobei die Kühlflüssigkeitszirkulation in der Leitung von dem Steuermittel (2) abhängt.

7. Vorrichtung nach Anspruch 6, bei der der Körper (6) einen zweiten Eingang (15) umfasst, der an einen zweiten Ausgang (16) über eine zweite Leitung (17) angeschlossen ist, wobei der erste Eingang (13) und der zweite Ausgang (16) durch ein Umgehungsmittel des Steuermittel (2) angeschlossen sind.

8. Vorrichtung nach Anspruch 7, bei der das Umgehungsmittel des Steuermittels (2) einen Kanal (18) und eine Lastverlustvorrichtung (19) umfasst.

9. Kühlflüssigkeitskreislauf (20), der einen Kompressor (28), einen ersten Wärmeaustauscher (29) zwischen der Kühlflüssigkeit und einem flüssigen Wärmeträger umfasst, ein Entspannungsmittel (32) und einen Verdampfer (33), der dazu bestimmt ist, einen Innenluftstrom (34), der ihn durchquert, durch Wärmeaustausch mit der Kühlflüssigkeit zu kühlen, **dadurch gekennzeichnet, dass** er einen zweiten Wärmeaustauscher (31) umfasst, der eingerichtet ist, um einen Wärmeaustausch zwischen einem Außenluftstrom (26) auf der Vorderseite eines Fahrzeugs (21) und der Kühlflüssigkeit herzustellen, und eine Steuervorrichtung (1) der Kühlflüssigkeitszirkulation nach einem der vorhergehenden Ansprüche.

10. Fahrzeug, das einen Kreislauf nach Anspruch 9 und eine Vorderseite umfasst, die geeignet ist, um von einem Außenluftstrom (26) des Fahrzeugs (21) durchquert zu werden, wobei die Vorderseite einen zweiten Wärmeaustauscher (31) umfasst, wobei die Steuervorrichtung (1) auf der Vorderseite derart eingerichtet ist, dass die Wärme leitende Oberfläche (9) dem Auslassluftstrom (26) ausgesetzt ist.

11. Fahrzeug nach Anspruch 10, das einen Motorraum (22) umfasst, in dem mindestens ein Antriebsaggregat des Fahrzeugs installiert ist, **dadurch gekennzeichnet, dass** es ein Wärmeisolationsmittel (42) der Wärme leitenden Oberfläche (9) gegenüber dem Motorraum (22) umfasst.

## Claims

1. Device (1) for controlling a circulation of coolant in a circuit (20) and capable of being exposed to a flow of outside air (26) on the front face of a vehicle (21), comprising a means (2) for controlling the circulation of coolant with at least one opening placed under the control of a thermostatic detection means (7), **characterized in that** the thermostatic detection means (7) comprises a thermoconductive surface (9) exposed to said flow of outside air (26).

2. Device according to Claim 1, in which the thermostatic detection means (7) is a chamber (10) containing a control fluid and delimited on one side by the thermoconductive surface (9) and on the other by a deformable membrane (11).

3. Device according to either of Claims 1 and 2, in which the thermoconductive surface (9) is produced in a material with a thermal conductivity at least equal to 30 W.m⁻¹.K⁻¹.

4. Device according to any one of Claims 1 to 3, in which the means (2) for controlling the circulation of coolant comprises a seat (3) which receives a stop plug (4) linked to the thermostatic detection means (7) by a rod (8).

5. Device according to any one of the preceding claims, comprising a body (6) from which the thermoconductive surface (9) emerges.

6. Device according to Claim 5, in which the body (6) comprises at least one first inlet (13) connected to a first outlet (14) via a first duct (12), the circulation of coolant in the duct being placed under the control of the control means (2).

7. Device according to Claim 6, in which the body (6) comprises a second inlet (15) connected to a second outlet (16) via a second duct (17), the first inlet (13) and the second outlet (16) being connected by a means for bypassing the control means (2).

8. Device according to Claim 7, in which the means for bypassing the control means (2) comprises a duct (18) and a head loss device (19).

9. Coolant circuit (20) comprising a compressor (28), a first exchanger (29) between the coolant and a heat transfer liquid, an expansion means (32) and an evaporator (33) intended to cool a flow of inside air (34) which passes through it by heat exchange with the coolant, **characterized in that** it comprises a second exchanger (31) arranged to produce a heat exchange between a flow of outside air (26) on the front face of a vehicle (21) and the coolant and a device (1) for controlling the circulation of the coolant according to any one of the preceding claims.

10. Vehicle comprising a circuit according to Claim 9 and a front face capable of being passed through by a flow of air (26) outside the vehicle (21), said front face comprising the second exchanger (31), said control device (1) being arranged on the front face so that the thermoconductive surface (9) is exposed to the flow of outside air (26).

11. Vehicle according to Claim 10, comprising an engine compartment (22) in which is installed at least one power train of the vehicle, **characterized in that** it comprises a means (42) for thermally insulating the thermoconductive surface (9) with respect to the engine compartment (22).
